# FASCICULE DE BREVET EUROPEEN

(11) **EP 3 290 669 B1**
(45) Date de publication et mention de la délivrance du brevet: **24.04.2019**
(21) Numéro de dépôt: 17187164.3
(22) Date de dépôt: 22.08.2017
(51) Int. Cl.: F01N 3/20, F01N 9/00, F01N 11/00

(54) **PROCÉDÉ DE COMMANDE D'UN SYSTÈME DE POST-TRAITEMENT DES GAZ D'ÉCHAPPEMENT DE TYPE SCR POUR SON MAINTIEN HORS GEL EN MODE AMORCÉ ET SYSTÈME METTANT EN OEUVRE LE PROCÉDÉ**
VERFAHREN ZUR STEUERUNG EINES SYSTEMS ZUR NACHBEHANDLUNG VON ABGASEN VOM TYP SCR FÜR DESSEN FROSTSCHUTZ BEI AKTIVIERTEM MODUS, UND SYSTEM ZUR UMSETZUNG DIESES VERFAHRENS
METHOD FOR CONTROLLING AN SCR EXHAUST GAS AFTER-TREATMENT SYSTEM FOR KEEPING SAME ABOVE FREEZING IN PRIMED MODE AND SYSTEM USING THE METHOD

(30) Priorité: 01.09.2016 FR 1658115
(43) Date de publication de la demande: 07.03.2018
(73) Titulaire: PSA Automobiles SA, 78300 Poissy (FR)
(72) Inventeur: DEZALOT, SYLVAIN, 78000 VERSAILLES (FR); BARON, DAMIEN, 16000 ANGOULEME (FR); STRUB, EMMANUEL, 70250 RONCHAMP (FR)

(56) Documents cités:
- EP-A1- 1 836 379
- JP-A- 2000 027 627
- JP-A- 2016 079 957
- US-A1- 2011 179 773

## Description

L'invention concerne de manière générale le domaine automobile. Plus particulièrement, l'invention concerne un procédé de commande d'un système de post-traitement SCR des gaz d'échappement pour le maintien hors gel de celui-ci lorsqu'il est en fonctionnement ou, autrement dit, amorcé. L'invention concerne également un système de post-traitement des gaz d'échappement de type SCR pour la mise en oeuvre du procédé de l'invention.

Dans les véhicules automobiles, les systèmes de post-traitement des gaz d'échappement à réduction catalytique sélective, dits SCR de « Sélective Catalytic Réduction » en anglais, sont devenus aujourd'hui indispensables pour satisfaire des normes environnementales de plus en plus sévères. Le contrôle des émissions des oxydes d'azote, désignés généralement sous la dénomination de NOx, pose une difficulté de dépollution particulière dans les moteurs Diesel qui fonctionnent avec un mélange air-carburant généralement pauvre.

La réduction SCR provoque une réduction sélective des NOx en azote et eau en présence d'un catalyseur spécifique et par l'action d'un réducteur. Le réducteur utilisé est habituellement l'ammoniac. L'ammoniac provient de la décomposition chimique d'un réactif, typiquement l'urée, qui est injecté dans la ligne d'échappement sous une forme aqueuse composée d'un mélange réactif d'eau et d'urée. Ce mélange réactif est commercialisé en Europe sous la marque déposée «AdBlue».

A l'exemple du document US2011179773A1, les systèmes de post-traitement SCR sont habituellement équipés d'un dispositif de chauffage pour éviter le gel du mélange réactif AdBlue (marque déposée) qui intervient sous -11°C de température ambiante. Lorsque la température ambiante est trop basse et que le dispositif de chauffage et les conditions de fonctionnement du moteur thermique ne permettent pas de garantir un état hors gel du système, la stratégie préférentielle de la technique antérieure consiste à interrompre l'injection du mélange réactif et à drainer celui-ci par exemple vers un réservoir du système. Ce drainage évacue le mélange réactif de l'injecteur du système et de sa conduite d'alimentation, évitant ainsi la formation d'un bloc de glace et une détérioration consécutive qui pourrait entrainer une immobilisation du véhicule pour réparation.

Dans la réglementation s'imposant aux constructeurs automobiles, et notamment avec la prochaine norme européenne d'émission dite « Euro 6c », il est défini une température ambiante maximale, en tant que température de seuil de purge, au-dessus de laquelle il n'est pas acceptable de procéder à une opération de purge du système SCR alors que le moteur thermique est en cours de fonctionnement. En effet, l'opération de purge implique alors un arrêt de l'action de dépollution sur les gaz d'échappement du véhicule. A titre d'exemple, l'activation d'un mode de purge pour purger les moyens d'injection en-dessous d'une certaine température est connue du document EP1836379A1.

Les essais effectués par l'entité inventive ont mis en évidence qu'en dessous d'une certaine température proche de la température de seuil de purge, la performance limitée du dispositif de chauffage fait courir des risques de gel élevés sur certains points de roulage spécifiques du véhicule, notamment à vitesse élevée, lorsque le véhicule est en situation de descente en faible charge. Un accroissement de la performance du dispositif de chauffage pour repousser la limite de gel en température de quelques degrés Celsius présente l'inconvénient d'une complexité accrue et d'un coût additionnel très conséquent.

Dans l'état de la technique, il a également été proposé de modifier la concentration de l'urée dans le mélange réactif ou d'ajouter des additifs. Une telle solution n'est pas satisfaisante. En effet, elle préconise d'utiliser un mélange réactif ayant des caractéristiques différentes de celles de l'AdBlue (marque déposée), mélange réactif qui bénéficie aujourd'hui d'un large réseau de distribution et pour lequel les constructeurs ont déjà fait des investissements conséquents en termes de recherche et développement.

La présente invention a pour objectif d'apporter une solution aux inconvénients susmentionnés de la technique antérieure.

Selon un premier aspect, l'invention concerne un procédé de commande de maintien hors gel d'un système de post-traitement de type à réduction catalytique sélective des gaz d'échappement d'un moteur thermique de véhicule automobile, le système comportant des moyens d'injection de mélange réactif dans une ligne d'échappement du véhicule, des moyens de chauffage de maintien hors gel, un réservoir de mélange réactif et une unité de commande, le système de post-traitement étant amorcé et le mélange réactif étant non congelé avant l'initiation du procédé, le procédé comprenant une commande d'activation des moyens de chauffage de maintien hors gel lorsqu'une température ambiante est comprise entre des premier et deuxième seuils de température prédéterminés, le premier seuil de température étant supérieur au deuxième seuil de température.

Conformément à l'invention, le procédé comprend également une commande d'activation des moyens d'injection imposant une injection d'un débit minimal prédéterminé du mélange réactif dans la ligne d'échappement lorsque la température ambiante est comprise entre un troisième seuil de température prédéterminé et le deuxième seuil de température, le troisième seuil de température étant compris entre les premier et deuxième seuils de température.

Grâce à l'invention, il devient ainsi possible de reculer le seuil de température à partir duquel une purge du système SCR devient indispensable. Par exemple, il a été possible, dans une réalisation particulière de l'invention, d'obtenir un gain de l'ordre de 2°C sur la température ambiante de gel. On notera également que l'invention n'altère pas le bilan énergétique du véhicule, car la consommation électrique de la commande des moyens d'injection est très faible.

Selon une autre caractéristique particulière de l'invention, le deuxième seuil de température est un seuil de purge signalant la nécessité de purger les moyens d'injection du mélange réactif lorsque la température ambiante atteint le deuxième seuil de température.

Selon encore une autre caractéristique particulière de l'invention, la commande d'activation des moyens d'injection impose une injection d'un débit minimal selon un mode pulsé.

Selon encore une autre caractéristique particulière de l'invention, lorsque le procédé est mis en oeuvre dans un système de post-traitement des gaz d'échappement utilisant un mélange réactif de type AdBlue (marque déposée), le mode pulsé opère avec une fréquence de 0,5 Hz.

Selon encore une autre caractéristique particulière de l'invention, lorsque le procédé est mis en oeuvre dans un système de post-traitement des gaz d'échappement utilisant un mélange réactif de type AdBlue (marque déposée), le débit minimal imposé est de 5 mg/s.

Selon encore une autre caractéristique particulière de l'invention, lorsque le procédé est mis en oeuvre dans un système de post-traitement des gaz d'échappement utilisant un mélange réactif de type AdBlue (marque déposée), le premier seuil de température est inférieur de 2°C à 7°C à une valeur de température ambiante à laquelle les moyens de chauffage de maintien hors gel ne sont pas encore activés.

Selon un second aspect, l'invention concerne un système de post-traitement de type à réduction catalytique sélective des gaz d'échappement d'un moteur thermique de véhicule automobile, le système comportant des moyens d'injection de mélange réactif dans une ligne d'échappement du véhicule, des moyens de chauffage de maintien hors gel, un réservoir de mélange réactif, une unité de commande et des moyens de commande d'activation des moyens de chauffage de maintien hors gel lorsqu'une température ambiante est comprise entre des premier et deuxième seuils de température prédéterminés, le premier seuil de température étant supérieur au deuxième seuil de température, le système de post-traitement étant amorcé et le mélange réactif non congelé.

Conformément à l'invention, le système comprend également des moyens de commande d'activation des moyens d'injection imposant une injection d'un débit minimal prédéterminé du mélange réactif dans la ligne d'échappement lorsque la température ambiante est comprise entre un troisième seuil de température prédéterminé et le deuxième seuil de température, le troisième seuil de température étant compris entre les premier et deuxième seuils de température.

Le maintien hors gel maintien du système de post-traitement SCR selon l'invention est assuré par lesdits moyens de commande d'activation des moyens d'injection imposant une injection d'un débit minimal.

Selon encore une autre caractéristique particulière de l'invention, les moyens de commande d'activation des moyens d'injection imposant l'injection du débit minimal comportent des moyens imposant l'injection du débit minimal selon un mode pulsé.

Selon encore une autre caractéristique particulière de l'invention, les moyens de commande d'activation des moyens d'injection imposant l'injection du débit minimal sont implémentés sous la forme d'un module logiciel dans l'unité de commande.

L'invention concerne également un véhicule automobile comportant un moteur thermique de type Diesel équipé du système de post-traitement des gaz d'échappement de l'invention, tel que décrit brièvement ci-dessus.

D'autres avantages et caractéristiques de la présente invention apparaîtront plus clairement à la lecture de la description ci-dessous de plusieurs modes de réalisation particuliers du procédé selon l'invention et de systèmes SCR pour sa mise en oeuvre, dans laquelle :
- la Fig.1 est un bloc-diagramme simplifié montrant un exemple d'architecture générale d'un système SCR pour la mise en oeuvre du procédé selon l'invention ; et
- les Figs.2a à 2c montrent des courbes d'activation de fonctions réalisées par le procédé selon l'invention et dépendantes de la température ambiante.

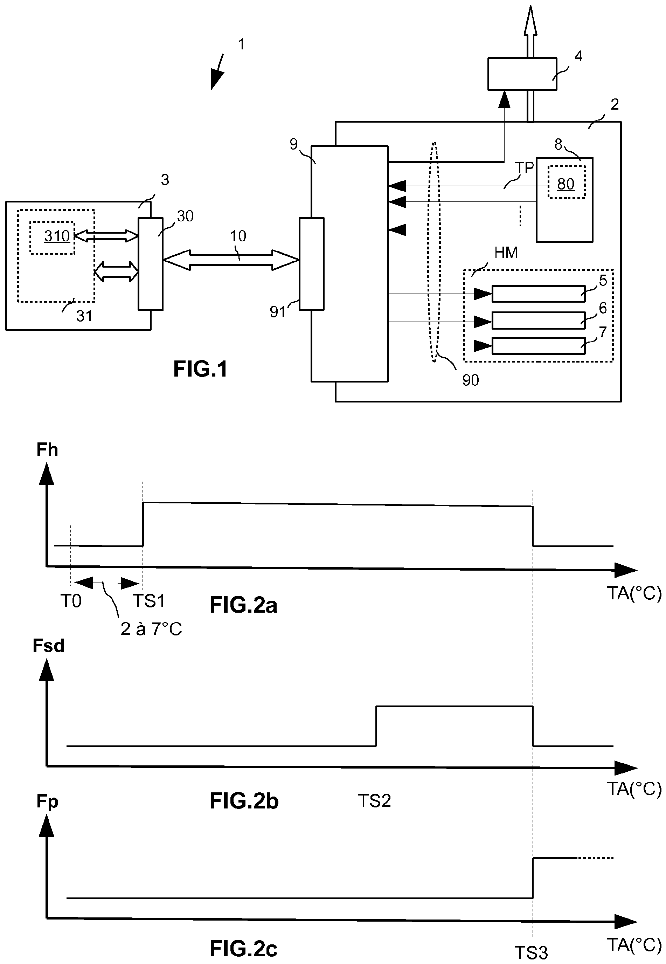

En référence à la Fig.1, il est d'abord décrit ci-dessous une architecture générale d'un système de post-traitement SCR des gaz d'échappement, référencé 1 à la Fig.1. Cette architecture, adaptée pour une mise en oeuvre du procédé selon l'invention, est présentée ici à titre d'exemple et est celle décrite de manière détaillée dans le brevet FR2919666B1 de la demanderesse. On notera cependant que le procédé selon l'invention peut être mis en oeuvre de manière générale dans toute architecture de système SCR.

Comme montré à la Fig.1, le système SCR 1 comprend un réservoir 2 contenant le mélange réactif destiné à être injecté dans les gaz d'échappement. Typiquement, le réservoir 2 est logé au niveau du coffre à bagages, à l'arrière du véhicule, dans le coffre lui-même ou sous le plancher de celui-ci. Le mélange réactif peut être une solution aqueuse d'urée, par exemple la solution aqueuse d'urée à 32,5 % désignée sous la marque déposée Adblue.

Le système SCR 1 comporte un injecteur 4 prévus pour prélever une quantité de mélange réactif dans le réservoir 2 et l'injecter dans les gaz d'échappement. L'injecteur 4 comporte une pompe doseuse (non représentée) commandée en fonction des besoins en pression du mélange réactif à injecter. Dans la Fig.1, la flèche partant de l'injecteur 4 représente l'injection dans les gaz d'échappement de la quantité de mélange réactif requise.

Des moyens de chauffage HM sont prévus dans le système SCR 1 et comporte essentiellement un dispositif de chauffage 5 pour chauffer le mélange réactif dans le réservoir 2 et des dispositifs de chauffage auxiliaire 6 et 7 pour chauffer une conduite entre le réservoir 2 et l'injecteur 4, ainsi que l'injecteur 4 lui-même équipé de sa pompe doseuse, afin d'éviter le gel du mélange réactif dans ces composants.

Des capteurs de température, repérés 80, sont utilisés dans le système SCR 1 pour mesurer des températures nécessaires à la gestion du chauffage du mélange réactif. Les capteurs de température 80 délivrent des informations de température TP.

D'autres capteurs, tels qu'un capteur de niveau et un capteur de pression de mélange réactif, équipent le réservoir 2 et sont localisés dans un bloc 8 dans lequel sont localisés aussi les capteurs de température 80.

Un circuit électronique de gestion de réservoir 9 est prévu dans le système SCR 1 et est monté sur le réservoir 2 dans cette forme de réalisation particulière. Le circuit 9 comprend notamment des moyens d'interface analogique/numérique et des moyens d'interface de liaison numérique multiplexée.

Dans cette forme de réalisation, l'ensemble des capteurs du bloc 8, incluant les capteurs de température 80, et les composants d'actionnement 4 à 7 du système SCR 1 sont de type analogique. Les différentes liaisons 90 représentées à la Fig.1 relient les capteurs et les composants d'actionnement à un port d'entrées/sorties analogiques du circuit 9.

Comme montré à la Fig.1, le circuit de gestion de réservoir 9 est reliée à l'unité de contrôle moteur 3 par une liaison numérique multiplexée 10 qui est ici une liaison établie à travers un réseau de type CAN. La liaison numérique multiplexée 10 est connectée en ses deux extrémités à des ports d'entrées/sorties d'interface réseau 91 et 30 du circuit 9 et de l'unité de contrôle moteur 3, respectivement.

L'ensemble des signaux du système SCR 1 disponibles au niveau du circuit 9 peut ainsi être transmis à l'unité de contrôle moteur 3, et plus précisément à une unité de commande 31 du système SCR 1 qui est implémentée dans l'unité 3 sous la forme d'un module logiciel dédié s'exécutant dans celle-ci.

L'unité de commande 31 traite la totalité des signaux et informations nécessaires pour la définition d'une commande adaptée du système SCR 1, c'est-à-dire, les signaux et informations transmis depuis le circuit 9 et ceux disponibles localement au niveau de l'unité de contrôle moteur 3.

Comme cela apparaitra plus clairement par la suite dans la description, conformément à l'invention, l'unité de commande 31 utilise en particulier les informations de température TP délivrées par les capteurs de température 80, afin de définir dans le système SCR 1 une commande de maintien hors gel adaptée aux conditions de température et de roulage du véhicule.

En référence également aux Figs.2a à 2c, il est maintenant décrit un mode de réalisation particulier du procédé de commande selon l'invention pour le maintien hors gel d'un système SCR lorsque celui-ci est amorcé, autrement dit que le catalyseur SCR a atteint sa température de fonctionnement, que le mélange réactif est non congelé et peut donc être injecté, et remplit ainsi sa fonction de dépollution des gaz d'échappement.

Comme montré aux Figs.2a à 2c, quatre valeurs de température T0, TS1, TS2 et TS3 sont prises en compte dans le procédé de commande selon l'invention. On notera que la relation suivante est respectée entre T0, TS1, TS2 et TS3 : T0 > TS1 > TS2 > TS3.

La valeur de température T0 est une valeur de température ambiante pour laquelle il est estimé qu'il n'y a aucun risque de gel, et les moyens de chauffage MH ne sont alors pas activés. Cette valeur de température T0 est typiquement sensiblement inférieure à -11°C, correspondant à la température de gel du mélange réactif AdBlue (marque déposée), lorsque cette solution aqueuse d'urée est utilisée. En effet, la température au voisinage des composants du système SCR 1 soumis au risque de gel peut être sensiblement supérieure à la température ambiante extérieure TA du fait notamment de la proximité de la ligne d'échappement qui apporte un certain réchauffement. Cette température ambiante extérieure TA est déduite par exemple à partir des informations de température TP fournies par les capteurs 80 (Fig.1).

En référence plus particulièrement aux Fig.2a et 2c, la valeur de température TS1 est un seuil de température qui détermine l'activation d'une fonction de chauffage Fh assurée par les moyens de chauffage HM (Fig.1). Conformément à l'invention, ce seuil de température TS1 est typiquement inférieur à la valeur de température T0 de de 2°C à 7°C, c'est-à-dire, T0-TS1<X, avec X compris entre 2°C à 7°C. L'activation des moyens de chauffage MH intervient lorsque la température ambiante externe TA est comprise entre le seuil de température TS1 et la valeur de température TS3. La valeur de température TS3 est un seuil de température qui déclenche une fonction de purge Fp, montrée à la Fig.2c, après avoir mis fin à l'activation des moyens de chauffage MH. Une valeur maximale du seuil de température TS3 au-dessus de laquelle la purge du système SCR ne sera pas autorisé est dans l'esprit de la prochaine norme européenne « Euro 6c ».

En référence plus particulièrement à la Fig.2b, conformément à l'invention, il est également prévu une fonction Fsd de débit spécifique de maintien hors gel. Comme montré à la Fig.2b, l'activation de cette fonction Fsd intervient lorsque la température ambiante externe TA est comprise entre le seuil de température TS2 et le seuil de température TS3 et donc pendant l'activation de la fonction de chauffage Fh entre TS1 et TS3.

La fonction Fsd selon l'invention gère l'injection d'un faible débit SD de mélange réactif dans la ligne d'échappement. Des essais réalisés par l'entité inventive ont montrés que l'injection de ce débit SD permet de repousser le phénomène de gel dans le système SCR 1 de quelques degrés.

De manière générale, dans les différentes applications de l'invention, le débit SD restera très faible et n'impactera la consommation de mélange réactif que de manière très limitée. Le débit SD est par exemple de l'ordre de 1/10ième du débit nécessaire à la dépollution des gaz d'échappement.

L'invention fait appel à un principe mécanique pour atteindre le résultat obtenu avec l'activation de la fonction Fsd. L'injection du débit SD est réalisée selon un mode pulsé qui provoque des "coups de bélier" réguliers qui cassent les cristaux de glace en formation dans le mélange réactif. Les cristaux deviennent alors suffisamment fins pour pouvoir être propulsés par l'injecteur dans la ligne d'échappement.

Conformément à l'invention, lorsque la fonction Fsd est activée, le débit SD, en tant que débit minimum, est maintenu en injection dans la ligne d'échappement. Le débit minimum SD est maintenu même lorsque la stratégie de dépollution des gaz d'échappement requiert un débit nul de mélange réactif, ce qui peut se produire du fait de la variation d'une consigne de débit de mélange réactif de dépollution en fonction du point de fonctionnement du moteur thermique.

A titre d'exemple, avec le mélange réactif AdBlue (marque déposée), il a été possible d'obtenir un gain de l'ordre de 2°C sur la température ambiante de gel avec un mode pulsé à 0,5 Hz et un débit SD de 5 mg/s. On notera que le débit de 5 mg/s est suffisamment faible pour limiter les risques d'encrassement de la ligne échappement, et est négligeable en termes de consommation du mélange réactif AdBlue (marque déposée). On notera également que le gain obtenu peut être accru avec une augmentation du débit SD, au détriment de la consommation de liquide réactif qui s'accroit. Grâce à l'invention, il devient ainsi possible de reculer le seuil de température TS3 à partir duquel une purge du système SCR devient indispensable.

Conformément à l'invention, la fonction Fsd d'injection du débit SD minimum de mélange réactif ne s'activera que lorsque la température ambiante TA vient au niveau du seuil de température TS2 prédéterminé. Ce seuil de température TS2 restera de préférence relativement proche de la température TA pour laquelle se produit le gel du mélange réactif, afin de limiter la consommation de celui-ci et les risques d'encrassement de la ligne d'échappement.

On notera également que la commande d'injection pour le débit minimum SD et le débit de mélange réactif de dépollution devra être inhibée avant l'activation de la fonction de purge Fp de manière à éviter une usure de l'injecteur par activation à sec de celui-ci.

Dans le système SCR 1 décrit ici, la mise en oeuvre du procédé selon l'invention est obtenue par l'implantation dans l'unité de commande 31, d'une loi de commande dédiée implémentée sous la forme d'un module logiciel 310. Ce module logiciel 310 comporte des séquences d'instructions dont l'exécution permet la mise en oeuvre du procédé selon l'invention.

Bien entendu, l'invention ne se limite au mode de réalisation particulier du procédé et à la forme de réalisation particulière du système SCR pour sa mise en oeuvre qui ont été décrits ici à titre d'exemple. L'homme du métier, selon les applications de l'invention, pourra y apporter différentes modifications et variantes qui entrent dans la portée des revendications ci-annexées.

## Revendications

1. Procédé de commande de maintien hors gel d'un système (1) de post-traitement de type à réduction catalytique sélective (SCR) des gaz d'échappement d'un moteur thermique de véhicule automobile, ledit système (1) comportant des moyens d'injection de mélange réactif (4) dans une ligne d'échappement dudit véhicule, des moyens de chauffage de maintien hors gel (HM), un réservoir de mélange réactif (2) et une unité de commande (31), le système (1) de post-traitement étant amorcé et le mélange réactif étant non congelé avant l'initiation du procédé, ledit procédé comprenant une commande (Fh) d'activation desdits moyens de chauffage de maintien hors gel (HM) lorsqu'une température ambiante (TA) est comprise entre des premier (TS1) et deuxième (TS3) seuils de température prédéterminés, ledit premier seuil de température (TS1) étant supérieur audit deuxième seuil de température (TS3), **caractérisé en ce qu'**il comprend également une commande (Fsd) d'activation desdits moyens d'injection (4) imposant une injection d'un débit minimal prédéterminé (SD) dudit mélange réactif dans ladite ligne d'échappement lorsque ladite température ambiante (TA) est comprise entre un troisième seuil de température prédéterminé (TS2) et ledit deuxième seuil de température (TS3), ledit troisième seuil de température (TS2) étant compris entre lesdits premier et deuxième seuils de température (TS1, TS3).

2. Procédé de commande de maintien hors gel selon la revendication 1, **caractérisé en ce que** ledit deuxième seuil de température (TS3) est un seuil de purge signalant la nécessité de purger lesdits moyens d'injection (4) du mélange réactif lorsque ladite température ambiante (TA) atteint ledit deuxième seuil de température (TS3).

3. Procédé de commande de maintien hors gel selon la revendication 1 ou 2, **caractérisé en ce que** ladite commande d'activation desdits moyens d'injection (4) impose une injection d'un débit minimal (SD) selon un mode pulsé.

4. Procédé de commande de maintien hors gel selon la revendication 3, mis en oeuvre dans un dit système (1) de post-traitement des gaz d'échappement utilisant un mélange réactif de type AdBlue (marque déposée), **caractérisé en ce que** ledit mode pulsé opère avec une fréquence de 0,5 Hz.

5. Procédé de commande de maintien hors gel selon la revendication 3 ou 4, mis en oeuvre dans un dit système (1) de post-traitement des gaz d'échappement utilisant un mélange réactif de type AdBlue (marque déposée), **caractérisé en ce que** ledit débit minimal (SD) est de 5 mg/s.

6. Procédé de commande de maintien hors gel selon l'une quelconque des revendications 1 à 5, mis en oeuvre dans un dit système (1) de post-traitement des gaz d'échappement utilisant un mélange réactif de type AdBlue (marque déposée), **caractérisé en ce que** ledit premier seuil de température (TS1) est inférieur de 2°C à 7°C à une valeur de température ambiante (T0) à laquelle lesdits moyens de chauffage de maintien hors gel (HM) ne sont pas encore activés.

7. Système de post-traitement de type à réduction catalytique sélective (SCR) des gaz d'échappement d'un moteur thermique de véhicule automobile, ledit système (1) comportant des moyens d'injection de mélange réactif (4) dans une ligne d'échappement dudit véhicule, des moyens de chauffage de maintien hors gel (HM), un réservoir de mélange réactif (2), une unité de commande (31) et des moyens de commande d'activation (Fh, 31, 310) desdits moyens de chauffage de maintien hors gel (HM) lorsqu'une température ambiante (TA) est comprise entre des premier (TS1) et deuxième (TS3) seuils de température prédéterminés, ledit premier seuil de température (TS1) étant supérieur audit deuxième seuil de température (TS3), le système (1) de post-traitement étant amorcé et le mélange réactif (4) non congelé, **caractérisé en ce qu'**il comprend également des moyens de commande d'activation (Fsd, 31, 310) desdits moyens d'injection (4) imposant une injection d'un débit minimal prédéterminé (SD) dudit mélange réactif dans ladite ligne d'échappement lorsque ladite température ambiante (TA) est comprise entre un troisième seuil de température prédéterminé (TS2) et ledit deuxième seuil de température (TS3), ledit troisième seuil de température (TS2) étant compris entre lesdits premier et deuxième seuils de température (TS1, TS3).

8. Système de post-traitement des gaz d'échappement selon la revendication 7, **caractérisé en ce que** lesdits moyens de commande d'activation (31, 310) desdits moyens d'injection (4) imposant ladite injection dudit débit minimal (SD) comportent des moyens (31, 310) imposant ladite injection dudit débit minimal (SD) selon un mode pulsé.

9. Système de post-traitement des gaz d'échappement selon la revendication 7 ou 8, **caractérisé en ce que** lesdits moyens de commande d'activation (31, 310) desdits moyens d'injection (4) imposant ladite injection dudit débit minimal (SD) sont implémentés sous la forme d'un module logiciel (310) dans ladite unité de commande (3).

10. Véhicule automobile comportant un moteur thermique de type Diesel, **caractérisé en ce qu'**il comprend un système selon l'une quelconque des revendications 7 à 9 pour un post-traitement des gaz d'échappement émis par ledit moteur thermique.

## Patentansprüche

1. Verfahren zur Steuerung zum Frostschutz eines Nachbehandlungssystems (1) vom Typ mit selektiver katalytischer Reduktion (SCR) der Abgase einer Kraftfahrzeugbrennkraftmaschine, wobei das System (1) Mittel zum Einspritzen eines Reaktionsgemischs (4) in einen Abgasstrang des Fahrzeugs, Frostschutzheizmittel (HM), einen Reaktionsgemischbehälter (2) und eine Steuereinheit (31) umfasst, wobei das Nachbehandlungssystem (1) aktiviert ist, und das Reaktionsgemisch vor dem Initiieren des Verfahrens nicht eingefroren ist, wobei das Verfahren eine Steuerung (Fh) zum Aktivieren der Frostschutzheizmittel (HM) umfasst, wenn eine Umgebungstemperatur (TA) zwischen einem vorbestimmten ersten (TS1) und zweiten Temperaturschwellenwert (TS3) liegt, wobei der erste Temperaturschwellenwert (TS1) größer ist als der zweite Temperaturschwellenwert (TS3), **dadurch gekennzeichnet, dass** es auch eine Steuerung (Fsd) zur Aktivierung der Einspritzmittel (4) umfasst, die eine Einspritzung eines vorbestimmten Mindestdurchsatzes (SD) des Reaktionsgemischs in den Abgasstrang auferlegt, wenn die Umgebungstemperatur (TA) zwischen einem dritten vorbestimmten Temperaturschwellenwert (TS2) und dem zweiten Temperaturschwellenwert (TS3) liegt, wobei der dritte Temperaturschwellenwert (TS2) zwischen dem ersten und dem zweiten Temperaturschwellenwert (TS1, TS3) liegt.

2. Steuerungsverfahren zum Frostschutz nach Anspruch 1, **dadurch gekennzeichnet, dass** der zweite Temperaturschwellenwert (TS3) ein Entleerungsschwellenwert ist, der die Notwendigkeit meldet, die Einspritzmittel (4) des Reaktionsgemischs zu entleeren, wenn die Umgebungstemperatur (TA) den zweiten Temperaturschwellenwert (TS3) erreicht.

3. Steuerungsverfahren zum Frostschutz nach Anspruch 1 oder 2, **dadurch gekennzeichnet, dass** der Aktivierungsbefehl der Einspritzmittel (4) eine Einspritzung eines Mindestdurchsatzes (SD) gemäß einem gepulsten Modus auferlegt.

4. Steuerungsverfahren zum Frostschutz nach Anspruch 3, das in einem Nachbehandlungssystem (1) der Abgase umgesetzt wird, das ein Reaktionsgemisch vom Typ AdBlue (eingetragenes Warenzeichen) verwendet, **dadurch gekennzeichnet, dass** der gepulste Modus bei einer Frequenz von 0,5 Hz arbeitet.

5. Steuerungsverfahren zum Frostschutz nach Anspruch 3 oder 4, das in einem Nachbehandlungssystem (1) der Abgase umgesetzt wird, das ein Reaktionsgemisch vom Typ AdBlue (eingetragenes Warenzeichen) verwendet, **dadurch gekennzeichnet, dass** der Mindestdurchsatz (SD) 5 mg/s beträgt.

6. Steuerungsverfahren zum Frostschutz nach einem der Ansprüche 1 bis 5, das in einem Nachbehandlungssystem (1) der Abgase umgesetzt wird, das ein Reaktionsgemisch vom Typ AdBlue (eingetragenes Warenzeichen) verwendet, **dadurch gekennzeichnet, dass** der erste Temperaturschwellenwert (TS1) um 2 °C bis 7 °C kleiner ist als ein Umgebungstemperaturwert (T0), bei dem die Frostschutzheizmittel (HM) noch nicht aktiviert werden.

7. Nachbehandlungssystem vom Typ mit selektiver katalytischer Reduktion (SCR) der Abgase eines Kraftfahrzeugbrennkraftmotors, wobei das System (1) Mittel zum Einspritzen von Reaktionsgemisch (4) in einen Abgasstrang des Fahrzeugs, Frostschutzheizmittel (HM), einen Reaktionsgemischbehälter (2), eine Steuereinheit (31) und Steuermittel zum Aktivieren (Fh, 31, 310) der Frostschutzheizmittel (HM) umfasst, wenn eine Umgebungstemperatur (TA) zwischen dem ersten (TS1) und zweiten (TS3) vorbestimmten Temperaturschwellenwert liegt, wobei der erste Temperaturschwellenwert (TS1) größer ist als der zweite Temperaturschwellenwert (TS3), wobei das Nachbehandlungssystem (1) aktiviert und das Reaktionsgemisch (4) nicht eingefroren ist, **dadurch gekennzeichnet, dass** es auch Steuermittel zum Aktivieren (Fsd, 31, 310) der Einspritzmittel (4) umfasst, die eine Einspritzung eines vorbestimmten Mindestdurchsatzes (SD) des Reaktionsgemischs in den Abgasstrang auferlegen, wenn die Umgebungstemperatur (TA) zwischen einem dritten vorbestimmten Temperaturschwellenwert (TS2) und dem zweiten Temperaturschwellenwert (TS3) liegt, wobei der dritte Temperaturschwellenwert (TS2) zwischen dem ersten und zweiten Temperaturschwellenwert (TS1, TS3) liegt.

8. Nachbehandlungssystem der Abgase nach Anspruch 7, **dadurch gekennzeichnet, dass** die Steuermittel (31, 310) zum Aktivieren der Einspritzmittel (4), die die Einspritzung des Mindestdurchsatzes (SD) auferlegen, Mittel (31, 310) umfassen, die das Einspritzen des Mindestdurchsatzes (SD) gemäß einem gepulsten Modus auferlegen.

9. Nachbehandlungssystem der Abgase nach Anspruch 7 oder 8, **dadurch gekennzeichnet, dass** die Steuermittel (31, 310) zum Aktivieren der Einspritzmittel (4), die die Einspritzung des Mindestdurchsatzes (SD) auferlegen, in der Form eines Softwaremoduls (310) in der Steuereinheit (3) umgesetzt sind.

10. Kraftfahrzeug, das eine Brennkraftmaschine vom Typ Diesel umfasst, **dadurch gekennzeichnet, dass** es ein System nach einem der Ansprüche 7 bis 9 für eine Nachbehandlung der Abgase, die von der Brennkraftmaschine abgegeben werden, umfasst.

## Claims

1. A controlling method for keeping above freezing an aftertreatment system (1) of the selective catalytic reduction (SCR) type of the exhaust gases of a motor vehicle combustion engine, said system (1) comprising injection means of reactive mixture (4) in an exhaust line of said vehicle, heating means (HM) for keeping above freezing, a reservoir of reactive mixture (2) and a control unit (31), the aftertreatment system (1) being primed and the reactive mixture being not frozen before the initiation of the method, said method including an activation command (Fh) of said heating means (HM) for keeping above freezing when an ambient temperature (TA) is comprised between first (TS1) and second (TS3) predetermined temperature thresholds, said first temperature threshold (TS1) being greater than said second temperature threshold (TS3), **characterized in that** it also includes an activation command (Fsd) of said injection means (4) imposing an injection of a predetermined minimum flow rate (SD) of said reactive mixture in said exhaust line when said ambient temperature (TA) is comprised between a third predetermined temperature threshold (TS2) and said second temperature threshold (TS3), said third temperature threshold (TS2) being comprised between said first and second temperature thresholds (TS1, TS3) .

2. The controlling method for keeping above freezing according to claim 1, **characterized in that** said second temperature threshold (TS3) is a purge threshold signalling the need to purge said injection means (4) of the reactive mixture when said ambient temperature (TA) reaches said second temperature threshold (TS3).

3. The controlling method for keeping above freezing according to claim 1 or 2, **characterized in that** said activation command of said injection means (4) imposes an injection of a minimum flow rate (SD) according to a pulsed mode.

4. The controlling method for keeping above freezing according to claim 3, implemented in a said aftertreatment system (1) of the exhaust gases using a reactive mixture of the AdBlue (registered trademark) type, **characterized in that** said pulsed mode operates with a frequency of 0.5 Hz.

5. The controlling method for keeping above freezing according to claim 3 or 4, implemented in a said aftertreatment system (1) of the exhaust gases using a reactive mixture of the AdBlue (registered trademark) type, **characterized in that** said minimum flow rate (SD) is 5 mg/s.

6. The controlling method for keeping above freezing according to any one of claims 1 to 5, implemented in a said aftertreatment system (1) of the exhaust gases using a reactive mixture of AdBlue (registered trademark) type, **characterized in that** said first temperature threshold (TS1) is less by 2 °C to 7 °C than an ambient temperature value (T0) at which said heating means (HM) for keeping above freezing are not yet activated.

7. An aftertreatment system of the selective catalytic reduction (SCR) type of the exhaust gases of a motor vehicle combustion engine, said system (1) comprising injection means of reactive mixture (4) in an exhaust line of said vehicle, heating means (HM) for keeping above freezing, a reservoir of reactive mixture (2), a control unit (31) and control means for activation (Fh, 31, 310) of said heating means (HM) for keeping above freezing when an ambient temperature (TA) is comprised between first (TS1) and second (TS3) predetermined temperature thresholds, said first temperature threshold (TS1) being greater than said second temperature threshold (TS3), the aftertreatment system (1) being primed and the reactive mixture (4) not frozen, **characterized in that** it also includes activation command means (Fsd, 31, 310) of said injection means (4) imposing an injection of a predetermined minimum flow rate (SD) of said reactive mixture in said exhaust line when said ambient temperature (TA) is comprised between a third predetermined temperature threshold (TS2) and said second temperature threshold (TS3), said third temperature threshold (TS2) being comprised between said first and second temperature thresholds (TS1, TS3) .

8. The aftertreatment system of exhaust gases according to claim 7, **characterized in that** said activation command means (31, 310) of said injection means (4) imposing said injection of said minimum flow rate (SD) comprise means (31, 310) imposing said injection of said minimum flow rate (SD) according to a pulsed mode.

9. The aftertreatment system of exhaust gases according to claim 7 or 8, **characterized in that** said activation command means (31, 310) of said injection means (4) imposing said injection of said minimum flow rate (SD) are implemented in the form of a software module (310) in said control unit (3).

10. A motor vehicle comprising a combustion engine of the diesel type, **characterized in that** it includes a system according to any one of claims 7 to 9 for an aftertreatment of the exhaust gases emitted by said combustion engine.
